# EUROPEAN PATENT SPECIFICATION

(11) **EP 2 436 014 B1**
(45) Date of publication and mention of the grant of the patent: **03.10.2018**
(21) Application number: 10849064.0
(22) Date of filing: 24.08.2010
(51) Int. Cl.: H01B 3/10, H01B 3/30, H01B 9/00

(54) **INSULATION MATERIAL COMPOSITION FOR DC POWER CABLE AND THE DC POWER CABLE USING THE SAME**
ISOLATIONSMATERIALZUSAMMENSETZUNG FÜR EIN GLEICHSTROMKABEL UND GLEICHSTROMKABEL DAMIT
COMPOSITION DE MATÉRIAU D'ISOLATION POUR CÂBLE ÉLECTRIQUE CC ET CÂBLE ÉLECTRIQUE CC ASSOCIÉ

(30) Priority: 02.04.2010 KR 20100030232
(43) Date of publication of application: 04.04.2012
(73) Proprietor: LS Cable Ltd., Gyeonggi-do 431-848 (KR)
(72) Inventor: KIM, Yoon-Jin, Gyeonggi-do 443-280 (KR); KO, Chang-Mo, Gwangmyeong-si Gyeonggi-do 423-761 (KR); NAM, Jin-Ho, Namyangju-si Gyeonggi-do 472-746 (KR); CHO, Ho-Souk, Seoul 130-020 (KR); PARK, Young-Ho, Anyang-si Gyeonggi-do 431-080 (KR)
(74) Representative: advotec.
(86) International application number: PCT/KR2010/005650
(87) International publication number: WO 2011/122742

(56) References cited:
- EP-A1- 0 132 610
- EP-A1- 0 332 729
- EP-A2- 0 453 262
- CN-A- 101 445 627
- JP-A- H1 186 634
- JP-A- 10 251 460
- JP-A- H04 368 720
- US-A- 3 971 882

## Description

### Technical Field

The present invention relates to an insulation material composition for direct current (DC) power cables. An insulation formed from the insulation material composition of the present invention may be used to DC power cables which are suitable as high voltage DC transmission lines of submarine cables, etc.

### Background Art

### <Cross-Reference to Related Application>

This application claims priority to Korean Patent Application No. 10-2010-0030232 filed in Republic of Korea on April 2, 2010.

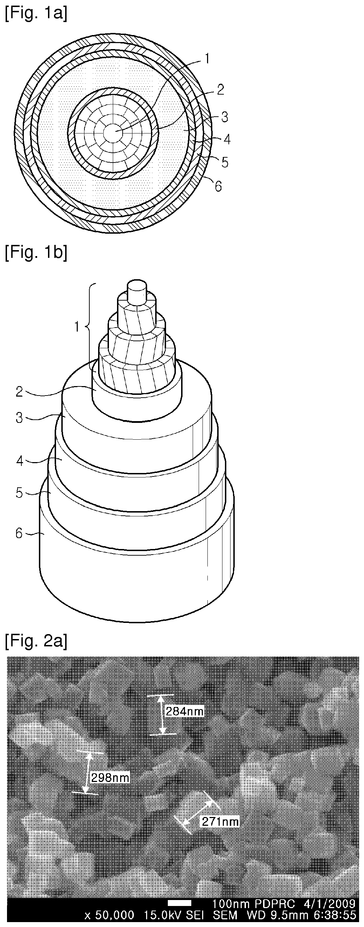

A power cable being currently used in the country comprises a conductor 1, an inner semiconducting layer 2, an insulation 3, an outer semiconducting layer 4, a lead sheath 5 and a polyethylene (PE) sheath 6, as shown in FIGs. 1a and 1b.

Polyethylene and crosslinked polyethylene have been widely used as the insulation 3 of the power cable. However, in case where a power cable with an insulation made from polyethylene or crosslinked polyethylene is used as a high voltage transmission line, several problems may occur. The worst problem is that when a high voltage DC is applied to a cable, a space charge is liable to generate due to movement of electric charges from an electrode into an insulation and the influence of crosslinking byproducts. And, if such a space charge is accumulated in a polyethylene insulation by a high voltage DC applied to a power cable, the electric field strength of the power cable near a conductor increases, resulting in reduced breakdown voltage of the cable.

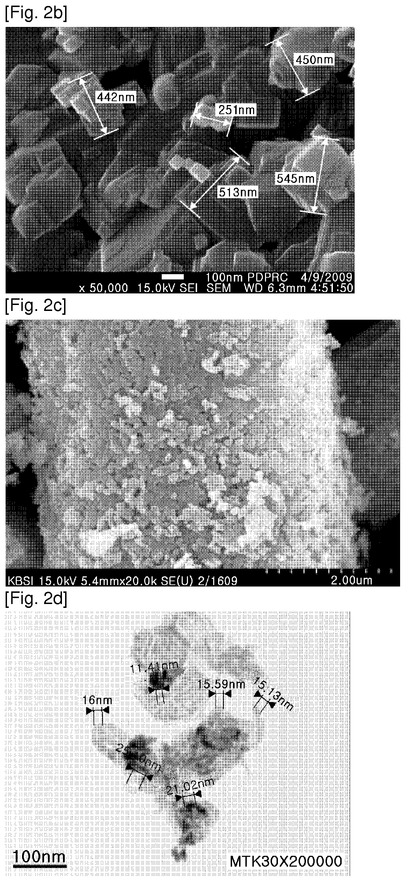

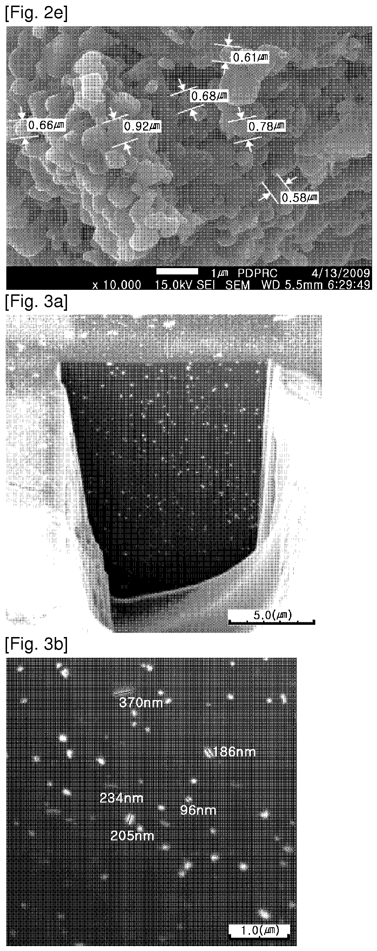

To solve the problem, solutions have been suggested to form an insulation using magnesium oxide. Magnesium oxide basically has a face centered cubic (FCC) crystal structure, but it may have various shapes, purity, crystallinity and properties according to synthesis methods. Magnesium oxide has cubic, terrace, rod-like, porous and spherical shapes, as shown in FIGs. 2a through 2e, and each shape may be used depending on specific properties. In particular, spherical magnesium oxide is used to suppress a space charge of a power cable, as suggested in Japanese Patent Nos. 2541034 and 3430875. As mentioned above, studies have been made to suppress a space charge in a power cable with an insulation made from polyethylene or crosslinked polyethylene.

### Disclosure of Invention

### Technical Problem

Therefore, it is an object of the present invention to provide an insulation material composition for a DC power cable, with an excellent space charge suppression effect.

### Solution to Problem

To achieve this object, an insulation material composition for a DC power cable according to the present invention comprises 0.5 to 5 parts by weight of surface-modified nano-sized cubic magnesium oxide, per 100 parts by weight of a crosslinked low-density polyethylene base resin, wherein an average particle size of the magnesium oxide is 500 nm or less.

### Advantageous Effects of Invention

A DC power cable with an insulation formed using an insulation material composition of the present invention has an increased volume resistivity and an excellent space charge suppression effect.

### Brief Description of Drawings

The accompanying drawings illustrate the preferred embodiments of the present invention and are included to provide a further understanding of the spirit of the present invention together with the detailed description of the invention.
FIG. 1a is a cross-sectional view of a DC power cable.
FIG. 1b is a view illustrating the structure of the DC power cable.
FIG. 2a is a scanning electron microscopy (SEM) image of cubic magnesium oxide.
FIG. 2b is an SEM image of terrace magnesium oxide.
FIG. 2c is an SEM image of rod-like magnesium oxide.
FIG. 2d is a TEM (TEM) image of porous magnesium oxide.
FIG. 2e is an SEM image of spherical magnesium oxide.
FIG. 3a is a focused ion beam (FIB)-SEM image of an insulation of the present invention.
FIG. 3b is an enlarged view of FIG. 3a, illustrating the particle size of cubic magnesium oxide particles included in the insulation.
FIG. 3c is a TEM image of the insulation of the present invention.

### Best Mode for Carrying out the Invention

Hereinafter, the present invention will be described in detail.

An insulation material composition of the present invention comprises 0.5 to 5 parts by weight of surface-modified nano-sized cubic magnesium oxide, per 100 parts by weight of a crosslinked low-density polyethylene base resin.

And, according to another object, the present invention may further comprise 0.1 to 3 parts by weight of a dicumyl peroxide crosslinking agent, and 0.1 to 2 parts by weight of at least one additive selected from the group consisting of an antioxidant and an ion scavenger.

Preferably, the magnesium oxide is surface-modified with vinyl silane, stearic acid, oleic acid, amonopolysiloxane and so on. Typically, the magnesium oxide is hydrophilic, i.e., having high surface energy, while the polyethylene base resin is hydrophobic, i.e., having low surface energy, and thus, dispersion of the magnesium oxide in the polyethylene base resin is low and electrical properties are deteriorated. To solve the problem, it is preferred to modify the surface of the magnesium oxide.

Without surface modification of the magnesium oxide, a gap is generated between the magnesium oxide and the polyethylene base resin, which causes a reduction in mechanical properties, and electrical properties such as breakdown strength.

On the other hand, surface modification of magnesium oxide with vinyl silane allows an excellent dispersion in the polyethylene base resin and improved electrical properties. Hydrolysable groups of vinyl silane are chemically bonded to the surface of magnesium oxide by a condensation reaction, so that magnesium oxide is surface-modified. Next, a silane group of the surface-modified magnesium oxide reacts with the polyethylene base resin, ensuring excellent dispersion.

Preferably, the magnesium oxide has a purity between 99.9 and 100% and an average particle size of 500 nm or less, and the magnesium oxide may have both monocrystalline and polycrystalline structures.

And, it is preferred to include the surface-modified nano-sized cubic magnesium oxide at an amount of 0.5 to 5 parts by weight. In case where the content of the surface-modified nano-sized cubic magnesium oxide is less than 0.5 parts by weight, it has a space charge suppression effect, but exhibits a relatively low DC breakdown strength. In case that the content of the surface-modified nano-sized cubic magnesium oxide exceeds 5 parts by weight, it reduces the mechanical performance and continuous extrudability.

The antioxidant of the present invention may use at least one selected from the group consisting of amine-based, dialkylester-based, thioester-based and phenol-based antioxidants.

The ion scavenger of the present invention may use aryl-based silane, and may allow a space charge suppression effect.

An insulation formed using an insulation material composition for a power cable according to the present invention may be used in manufacturing a DC power cable.

### Mode for the Invention

Hereinafter, the present invention will be described in detail through examples. However, the description proposed herein is just a preferable example for the purpose of illustrations only, not intended to limit the scope of the invention, so it should be understood that the examples are provided for a more definite explanation to an ordinary person skilled in the art.

Insulation material compositions of examples and comparative examples were prepared according to composition of the following table 1, to find out changes in performance depending on the shape and particle size of magnesium oxide of an insulation material composition for a DC power cable. The unit of content in Table 1 is parts by weight.

### Table 1

### [Table 1]

**[Table]**

| Components | | Example 1 | Example 2 | Example 3 | Comparative example 1 | Comparative example 2 | Comparative example 3 |
|---|---|---|---|---|---|---|---|
| Content of base resin | | 100 | 100 | 100 | 100 | 100 | 100 |
| Magnesium oxide | Content | 2.0 | 2.0 | 2.0 | None | 2.0 | 2.0 |
| | Shape | Cubic | Cubic | Cubic | | Terrace | Spherical |
| | D50(nm) | 70 | 100 | 240 | | 100 | 100 |
| | D99(nm) | 110 | 150 | 270 | | 150 | 150 |
| | Purity ( %) | 99.95 | 99.95 | 99.95 | | 99.95 | 99.95 |
| Content of crosslinking agent | | 2 | 2 | 2 | 2 | 2 | 2 |
| Content of antioxidant | | 0.4 | 0.4 | 0.4 | 0.4 | 0.4 | 0.4 |

### [Components of Table 1]

- Base resin: Crosslinked low-density polyethylene resin (LG chem., LE2030; Density: 0.85∼0.95 kg/m³, Melt index (MI): 1∼2)
- Magnesium oxide: Powdery magnesium oxide surface-modified with vinyl silane. For improved dispersion, roll mixing milling is made such that D99 (maximum particle size) is not three times more than D50 (average particle size)
- Crosslinking agent: Dicumyl peroxide
- Antioxidant: tetrakis-(methylene-(3,5-di-(tert)-butyl-4-hydrocinnamate))methane

### Property measurement and evaluation

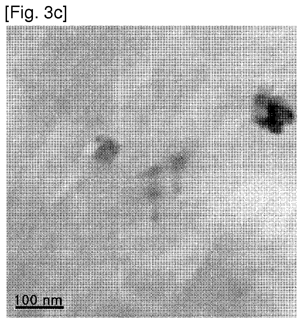

Master batch compounds were prepared using insulation material compositions of examples 1 to 3 and comparative examples 1 to 3, and extruded using a twin screw extruder whose screw diameter is 25 mm(L/D=60). The resulting insulation of the present invention is shown in FIG. 3a as a FIB-SEM image, and FIG. 3b is an enlarged view of FIG. 3a, illustrating cubic magnesium oxide contained in the insulation. And, the insulation of the present invention is shown in FIG. 3c as a TEM image.

The insulations according to examples 1 to 3 and comparative examples 1 to 3 were thermocompressed to manufacture a 0.1mm-thick section for measuring volume resistivity and DC breakdown strength, and a 1mm-thick sheet-type section for measuring impulse strength, and the sections were tested for volume resistivity, DC breakdown strength (ASTM D149) and impulse strength, and the test results are shown in the following Table 2. The test conditions are briefly described as follows.

### 1) Volume resistivity

When a DC electric field of 80 kV/mm is applied, volume resistivity (x 10¹⁴ Ω·cm) is measured.

### 2) DC breakdown strength

DC breakdown strength (kV) is measured at 90°C.

### 3) Impulse strength

A 1mm-thick sheet-type section is connected to electrodes, with increasing voltage from 50kV by 5kV until the section is broken, and impulse strength is measured.

### Table 2

### [Table 2]

**[Table]**

| Items | Example 1 | Example 2 | Example 3 | Comparative example 1 | Comparative example 2 | Comparative example 3 |
|---|---|---|---|---|---|---|
| Volume resistivity (x10¹⁴ Ω·cm) | 10 | 8 | 8 | 4 | 5 | 6 |
| DC breakdown strength (kV/mm ) | 125 | 115 | 110 | 55 | 80 | 95 |
| Impulse strength (kV/mm ) | 110 | 105 | 100 | 120 | 60 | 80 |

As shown in Table 2, the sections of examples 1 to 3 exhibited relatively higher volume resistivity and DC breakdown strength than comparative example 1 (without magnesium oxide), comparative example 2 (with terrace magnesium oxide), and comparative example 3 (with spherical magnesium oxide). That is, the sections of examples 1 to 3 using cubic magnesium oxide according to the present invention have excellent electrical insulating properties.

And, the sections of examples 1 to 3 hardly have a reduction in impulse strength when compared with comparative example 1 (without magnesium oxide). That is, although the sections of the present invention used the surface-modified magnesium oxide which is an inorganic additive, to exhibit excellent electrical insulating properties, they showed a similar level of impulse strength to that of comparative example 1 without any inorganic additive such as magnesium oxide.

Among the sections of examples 1 to 3, particularly the section of example 1 with the smallest average particle size had excellent effects in volume resistivity, DC breakdown strength and impulse strength.

As seen in the above results, an insulation made from an insulation material composition for a DC power cable and a power cable provided therewith had excellent effects in volume resistivity, DC breakdown strength and impulse strength for the following reasons: First, cubic magnesium oxide was used to suppress a space charge. Secondly, magnesium oxide was surface-modified, such that the surface energy of the surface-modified magnesium oxide is similar to that of polyethylene base resin, inducing a chemical bond between the surface-modified magnesium oxide and the polyethylene base resin to ensure an optimum dispersion. Thirdly, the components of the insulation material composition were mixed at a proper content.

## Claims

1. An insulation material composition for a direct current (DC) power cable, the composition comprising:
0.5 to 5 parts by weight of surface-modified nano-sized cubic magnesium oxide, per 100 parts by weight of a crosslinked low-density polyethylene base resin, wherein an average particle size of the magnesium oxide is 500 nm or less.

2. The insulation material composition for a DC power cable according to claim 1, further comprising:
per 100 parts by weight of the low-density polyethylene base resin,
0.1 to 3 parts by weight of a dicumylperoxide crosslinking agent; and
0.1 to 2 parts by weight of at least one additive selected from the group consisting of an antioxidant and an ion scavenger.

3. The insulation material composition for a DC power cable according to claim 1 or 2, wherein the magnesium oxide has a purity of 99.9% or more.

4. The insulation material composition for a DC power cable according to claim 1 or 2, wherein the magnesium oxide is monocrystalline or polycrystalline.

5. A DC power cable, comprising an insulation made using an insulation material composition for a DC power cable, defined in claim 1 or 2.

## Patentansprüche

1. Isolierungsmaterialzusammensetzung für ein Gleichstromkabel, wobei die Zusammensetzung Folgendes umfasst:
0,5 bis 5 Gewichtsteile oberflächenmodifiziertes kubisches Magnesiumoxid in Nanogröße pro 100 Gewichtsteile eines Harzes auf Basis von vernetztem Weich-Polyethylen, wobei eine durchschnittliche Partikelgröße des Magnesiumoxids 500 nm oder weniger beträgt.

2. Isolierungsmaterialzusammensetzung für ein Gleichstromkabel nach Anspruch 1, des Weiteren umfassend:
pro 100 Gewichtsteile des Harzes auf Basis von vernetztem Weich-Polyethylen
0,1 bis 3 Gewichtsteile eines Dicumylperoxid-Vernetzers; und
0,1 bis 2 Gewichtsteile mindestens eines Additivs, das aus der Gruppe bestehend aus einem Antioxidans und einem Ionenfänger ausgewählt ist.

3. Isolierungsmaterialzusammensetzung für ein Gleichstromkabel nach Anspruch 1 oder 2, wobei das Magnesiumoxid eine Reinheit von 99,9 % oder mehr aufweist.

4. Isolierungsmaterialzusammensetzung für ein Gleichstromkabel nach Anspruch 1 oder 2, wobei das Magnesiumoxid monokristallin oder polykristallin ist.

5. Gleichstromkabel, umfassend eine Isolierung, die unter Verwendung einer Isolierungsmaterialzusammensetzung für ein Gleichstromkabel nach Anspruch 1 oder 2 hergestellt ist.

## Revendications

1. Composition de matériau d'isolation pour un câble électrique à courant continu (CC), la composition comprenant :
0,5 à 5 parties en poids d'oxyde de magnésium cubique nano-dimensionné modifié en surface par 100 parties en poids d'une résine à base de polyéthylène à faible densité réticulé, dans laquelle une taille moyenne des particules de l'oxyde de magnésium est 500 nm ou moins.

2. Composition de matériau d'isolation pour un câble électrique CC selon la revendication 1, comprenant en outre :
par 100 parties en poids de la résine à base de polyéthylène à faible densité,
0,1 à 3 parties en poids d'un agent réticulant de peroxyde de dicumyle ; et
0,1 à 2 parties en poids d'au moins un additif sélectionné dans le groupe composé d'un antioxydant et d'un capteur d'ions.

3. Composition de matériau d'isolation pour un câble électrique CC selon la revendication 1 ou la revendication 2, dans laquelle l'oxyde de magnésium a une pureté de 99,9 % ou plus.

4. Composition de matériau d'isolation pour un câble électrique CC selon la revendication 1 ou la revendication 2, dans laquelle l'oxyde de magnésium est monocristallin ou polycristallin.

5. Câble électrique CC comprenant une isolation fabriquée en utilisant la composition de matériau d'isolation pour un câble électrique CC selon la revendication 1 ou la revendication 2.
